(19) Europäisches Patentamt / European Patent Office / Office européen des brevets

(11) **EP 4 191 993 A1**

(12) **EUROPEAN PATENT APPLICATION**
published in accordance with Art. 153(4) EPC

(43) Date of publication:
**07.06.2023 Bulletin 2023/23**

(21) Application number: **21850995.8**

(22) Date of filing: **21.05.2021**

(51) International Patent Classification (IPC):
*H04N 5/232* (2006.01)    *G06T 1/00* (2006.01)
*G06T 5/00* (2006.01)    *G06T 7/80* (2017.01)
*G06T 7/90* (2017.01)    *H04N 1/387* (2006.01)
*H04N 5/222* (2006.01)    *H04N 9/04* (2006.01)

(52) Cooperative Patent Classification (CPC):
**H04N 23/60;** G06T 1/00; G06T 5/00; G06T 7/80;
G06T 7/90; H04N 1/387; H04N 5/222; H04N 23/10

(86) International application number:
**PCT/JP2021/019281**

(87) International publication number:
**WO 2022/024516 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2020  JP 2020128244**

(71) Applicant: **FUJIFILM Corporation
Tokyo 106-8620 (JP)**

(72) Inventor: **YAMAZAKI, Yoshiro
Tokyo 106-8620 (JP)**

(74) Representative: **Meissner Bolte Partnerschaft
mbB
Patentanwälte Rechtsanwälte
Postfach 86 06 24
81633 München (DE)**

(54) **IMAGE CORRECTION DEVICE, IMAGE CORRECTION METHOD, PROGRAM, AND RECORDING MEDIUM**

(57)    In an image correction apparatus, an image correction method, a program, and a recording medium, by an imaging apparatus, a video image in which a correction chart is captured is acquired, and the video image in which an object having a sheet shape is continuously acquired at least one of before or after the correction chart is captured. A plurality of correction chart images in which the correction chart is captured and a plurality of object images in which the object is captured are extracted from a plurality of frame images included in the video image. A correction parameter for correcting a representative object image of the plurality of object images is generated based on the plurality of correction chart images, and the representative object image is corrected using the correction parameter.

FIG. 10

START
→ FIRST ACQUISITION PROCESSING OF VIDEO IMAGE — S1
→ SECOND ACQUISITION PROCESSING OF VIDEO IMAGE — S2
→ DETERMINATION PROCESSING OF FRAME IMAGE — S3
→ EXTRACTION PROCESSING OF FRAME IMAGE — S4
→ GENERATION PROCESSING OF CORRECTION PARAMETER — S5
→ CORRECTION PROCESSING OF REPRESENTATIVE OBJECT IMAGE — S6
→ END

EP 4 191 993 A1

**Description**

**BACKGROUND OF THE INVENTION**

1. Field of the Invention

The present invention relates to an image correction apparatus, an image correction method, a program, and a recording medium for image formation by capturing an object by an imaging apparatus and performing image correction on an object image in which the object is captured.

2. Description of the Related Art

In a case of image formation (digital datafication) by capturing an object by an imaging apparatus such as a camera, for example, before the object is captured or after the object is captured, a correction chart for performing image correction for figure distortion, brightness and color of the image, and the like is captured, a correction parameter is created from a correction chart image in which the correction chart is captured, and an object image in which the object is captured is corrected using the correction parameter.

However, in a case where, particularly, a user performs imaging by holding the imaging apparatus in a hand unlike a case where an imaging environment such as an angle of view and an illumination state at a time of imaging is constantly maintained as in a scanner or the like, it is difficult to image the correction chart and the object by constantly maintaining the imaging environment such as the angle of view and the illumination state at the time of imaging. Thus, there is a problem that it is significantly difficult to obtain the object image on which the image correction is correctly performed.

For example, JP2016-171475A, JP2007-194794A, and JP2004-007300A are prior art documents as a reference for the present invention.

JP2016-171475A discloses an image processing system that generates an image processing parameter of gray balance correction, color correction, and the like using a read image obtained by reading a calibration image, a captured image of the calibration image captured by an imaging apparatus of a portable communication terminal, and an imaging condition of the captured image and corrects a captured image of a subject captured by the imaging apparatus of the portable communication terminal using the image processing parameter.

JP2007-194794A discloses an imaging apparatus that images a seat on which a color bar showing a color pixel value of each color set in advance and vertices of a polygonal shape having a known shape are marked, projectively transforms each coordinate of a polygonal shape image into an output coordinate system based on coordinates of the vertices of the polygonal shape marked on the seat in a captured image, acquires a color correction parameter from each color pixel value of a color bar image in the output coordinate system, and performs color correction and brightness correction of the captured image using the color correction parameter.

JP2004-007300A discloses an imaging apparatus that displays a calibration test chart for adjusting reproducibility of a color, brightness, or shape of a captured image, captures the displayed calibration test chart, calculates a correction parameter for the captured image based on a color, brightness, or shape of the displayed test chart, and performs correction processing such as color correction, brightness correction, and shape correction of the captured image using the correction parameter.

**SUMMARY OF THE INVENTION**

An object of the present invention is to solve the problem of the technology in the related art and provide an image capturing apparatus, an image capturing method, a program, and a recording medium that can perform image formation by performing image correction on an object with high quality in any imaging environment.

In order to accomplish the object, according to an aspect of the present invention, there is provided an image correction method comprising a first acquisition step of acquiring a video image in which a correction chart is captured,

a second acquisition step of continuously acquiring the video image in which an object having a sheet shape is captured by the imaging apparatus at least one of before or after the correction chart is captured,
an extraction step of extracting a plurality of correction chart images in which the correction chart is captured and a plurality of object images in which the object is captured from a plurality of frame images included in the video image,
a generation step of generating a correction parameter for correcting a representative object image of the plurality of object images based on the plurality of correction chart images, and
a correction step of correcting the representative object image using the correction parameter.

Here, it is preferable that the image correction method further comprises a determination step of determining whether each of the plurality of frame images is the object image or the correction chart image based on a correlation between adjacent frame images among the plurality of frame images included in the video image,
in which the plurality of object images and the plurality of correction chart images are extracted from the plurality of frame images included in the video image based on a determination result of the determination step.

In addition, it is preferable that a lens aberration correction parameter for correcting figure distortion caused by an aberration of a lens of the imaging apparatus is generated based on the plurality of correction chart images, and the figure distortion caused by the aberration of the lens is corrected for each of the plurality of correction chart images and for each of the plurality of object images using the lens aberration correction parameter.

In addition, it is preferable that a tilting correction parameter for correcting figure distortion caused by tilting at a time of imaging is generated based on a plurality of reference points on a representative correction chart image of the plurality of correction chart images after the correction of the figure distortion caused by the aberration of the lens, and the figure distortion caused by tilting is corrected for each of the plurality of object images after the correction of the figure distortion caused by the aberration of the lens, using the tilting correction parameter.

In addition, it is preferable that the correction chart includes a plurality of achromatic patches having different densities, and a plurality of density patches having the same density are spatially discretely arranged for each of the plurality of achromatic patches,

signal values at positions of a plurality of density patch images corresponding to positions of the plurality of density patches having the same density are acquired for each of a plurality of achromatic patch images by extracting the plurality of achromatic patch images corresponding to the plurality of achromatic patches from the representative correction chart image,
a plurality of interpolated images corresponding to the plurality of achromatic patch images are created by calculating a signal value at each pixel position of an interpolated image having a size of the representative correction chart image by interpolation based on the signal values at the positions of the plurality of density patch images corresponding to the positions of the plurality of density patches having the same density for each of the plurality of achromatic patch images,
a spatial average value that is an average value of signal values at all pixel positions is calculated for each of the plurality of interpolated images,
a gradation correction parameter for performing gradation correction such that there is no difference between a reflectivity of the plurality of achromatic patches acquired in advance and the spatial average value of the plurality of interpolated images is generated, and
the gradation correction of the plurality of interpolated images, the representative correction chart image, and the representative object image of the plurality of object images after the correction of the figure distortion caused by tilting is performed using the gradation correction parameter.

In addition, it is preferable that a two-dimensional shading correction parameter for performing correction such that the spatial average value of the plurality of interpolated images after the gradation correction does not change before and after shading correction and that a two-dimensional distribution of signal values of a representative interpolated image of the plurality of interpolated images after the gradation correction is flat before and after the shading correction is created based on the plurality of interpolated images after the gradation correction, and
the shading correction of the representative correction chart image and the representative object image is performed using the shading correction parameter.

In addition, it is preferable that the correction chart includes a plurality of chromatic patches having different colors,

a signal value of each of a plurality of chromatic patch images is acquired by extracting the plurality of chromatic patch images corresponding to the plurality of chromatic patches from the representative correction chart image,
a color correction parameter for performing color correction such that there is no difference between a signal value of each of the plurality of chromatic patches acquired in advance and a signal value of each of the plurality of corresponding chromatic patch images is generated, and
the color correction of the representative object image after the shading correction is performed using the color correction parameter.

In addition, it is preferable that the plurality of object images are extracted from a frame image on a side of a best imaging state among the plurality of frame images included in the video image.

In addition, it is preferable that the plurality of correction chart images are extracted from a frame image on a side of the imaging state most similar to the plurality of object images among the plurality of frame images included in the video image.

In addition, it is preferable that a video image of the object arranged on the correction chart is captured.

In addition, it is preferable that the object is a measurement sheet that develops color with a density corresponding to external energy by application of the external energy.

In addition, according to another aspect of the present invention, there is provided an image correction apparatus comprising a processor, in which the processor is configured to

acquire a video image in which a correction chart is captured by an imaging apparatus,
continuously acquire the video image in which an object having a sheet shape is captured by the imaging apparatus at least one of before or after the correction chart is captured,
extract a plurality of correction chart images in which the correction chart is captured and a plurality of object images in which the object is captured from a plurality of frame images included in the video image,
generate a correction parameter for correcting a representative object image of the plurality of object images based on the plurality of correction chart images, and
correct the representative object image using the correction parameter.

In addition, according to still another aspect of the present invention, there is provided a program causing a computer to execute each step of any image correction method above.

In addition, according to still another aspect of the present invention, there is provided a computer readable recording medium on which a program causing a computer to execute each step of any image correction method above.

According to the present invention, since the correction chart and the object are captured to acquire the video image, the correction chart image and the object image having favorable imaging states and similar imaging states can be extracted from the plurality of frame images included in the video image, and image correction of the object image can be performed based on the correction chart image. Thus, even in a case where a user captures the object in an arbitrary imaging environment, it is possible to perform image formation by performing the image correction on the object more easily with higher quality.

## BRIEF DESCRIPTION OF THE DRAWINGS

Fig. 1 is a concept diagram of an embodiment representing a configuration of an image correction apparatus according to an embodiment of the present invention.
Fig. 2 is a block diagram of an embodiment representing an internal configuration of an imaging apparatus.
Fig. 3 is a block diagram of an embodiment representing an internal configuration of a processor.
Fig. 4 is a concept diagram of an example representing a lattice pattern.
Fig. 5 is a concept diagram of an example representing an achromatic pattern.
Fig. 6 is a concept diagram of an example representing a chromatic pattern.
Fig. 7 is a concept diagram of another example representing the chromatic pattern.
Fig. 8 is a concept diagram of an example representing a configuration of a correction chart.
Fig. 9 is a concept diagram of an example representing an imaging order of the correction chart and an object.
Fig. 10 is a flowchart of an example representing an operation of the image correction apparatus.
Fig. 11 is a concept diagram of another embodiment representing the configuration of the image correction apparatus according to the embodiment of the present invention.

## DESCRIPTION OF THE PREFERRED EMBODIMENTS

Hereinafter, an image correction apparatus, an image correction method, a program, and a recording medium according to the embodiment of the present invention will be described in detail based on a preferred embodiment illustrated in the appended drawings.

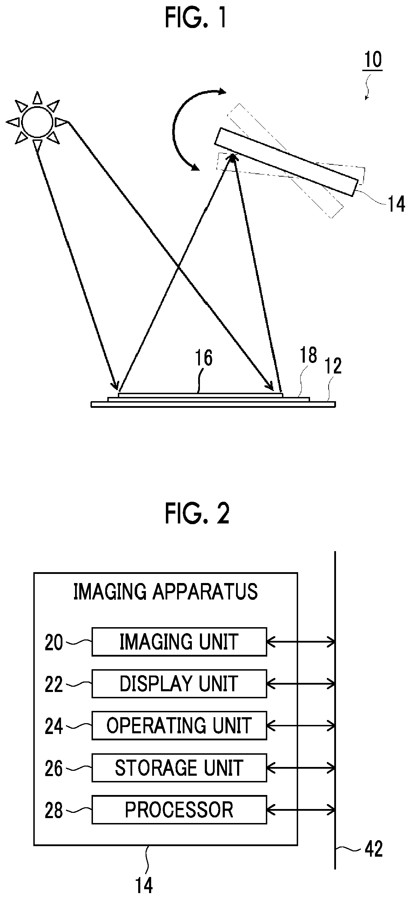

Fig. 1 is a concept diagram of an embodiment representing a configuration of the image correction apparatus according to the embodiment of the present invention. An image correction apparatus 10 illustrated in Fig. 1 comprises an original document stand 12 and an imaging apparatus 14.

The original document stand 12 is a stand for arranging (placing) and capturing an object 16. A correction chart 18 is formed by, for example, printing or pasting a color chart on one surface (an upper surface in Fig. 1) of the original document stand 12. The original document stand 12 is a stand for arranging the correction chart 18 and the object 16. At a time of imaging, the object 16 is arranged on the correction chart 18 formed on one surface of the original document stand 12.

The correction chart 18 is used for creating a correction parameter for correcting a correction chart image in which the correction chart 18 is captured and an object image in which the object 16 is captured. The correction chart image and the object image are captured by the imaging apparatus 14. The correction chart 18 is not particularly limited as long as the correction chart 18 can be used for image correction of the correction chart image and the object image. Examples of the correction chart 18 can include a lattice pattern, an achromatic pattern, and a chromatic pattern.

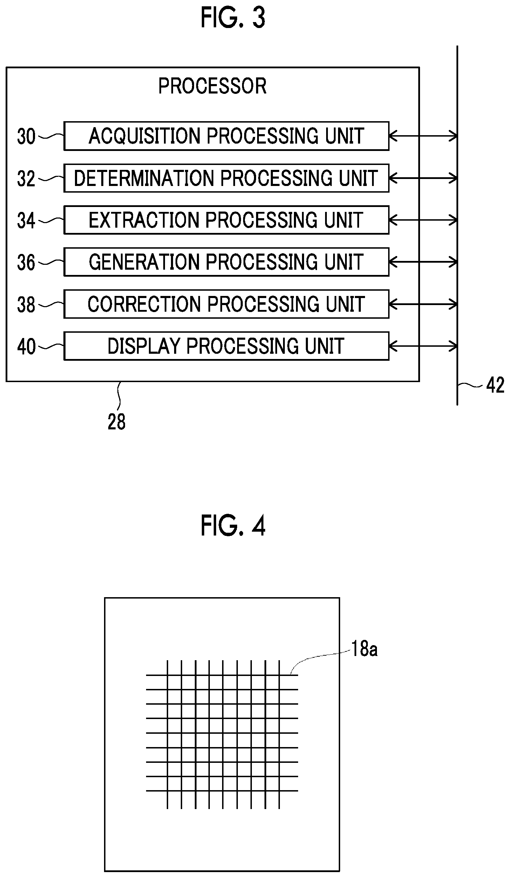

As illustrated in Fig. 4, the lattice pattern has a configuration in which a plurality of rectangular figures are two-dimensionally arranged by a plurality of lines extending in one direction and a plurality of lines extending in a direction orthogonally intersecting with the plurality of lines. A lattice pattern 18a illustrated in Fig. 4 is a monochrome pattern of a lattice form formed with a plurality of black lines on a white background for correcting white balance. The lattice pattern is used for correction of figure distortion, correction of the white balance, and the like.

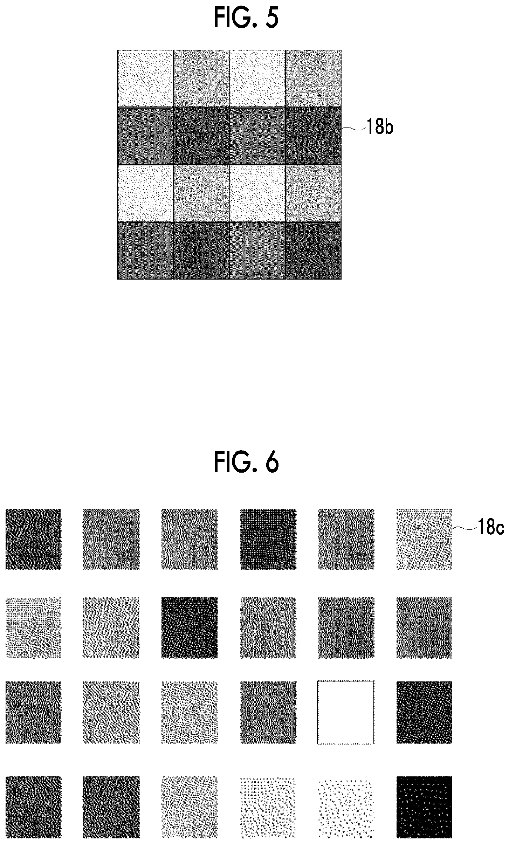

As illustrated in Fig. 5, the achromatic pattern has a configuration in which a plurality of achromatic patches having different densities are two-dimensionally arranged. An achromatic pattern 18b illustrated in Fig. 5 includes four types of rectangular achromatic patches having different densities. A plurality of rectangular density patches having the same density are spatially discretely arranged in each of the four types (four gradations) of achromatic patches. The achromatic pattern is used for correction of the figure distortion, gradation correction, shading correction, and the like.

The number (the number of gradations) of achromatic patches included in the achromatic pattern is not particularly limited.

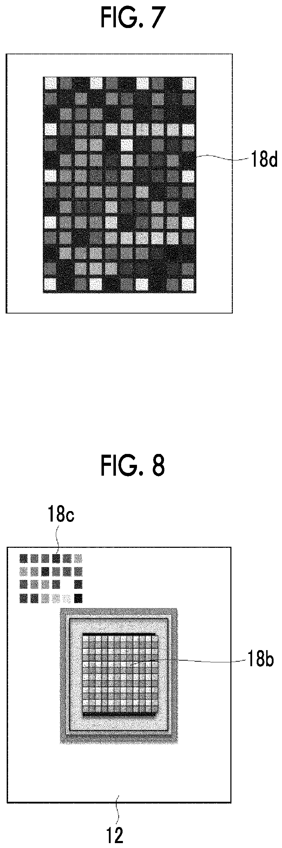

As illustrated in Figs. 6 and 7, the chromatic pattern has a configuration in which a plurality of chromatic patches having different colors are two-dimensionally arranged. Chromatic patterns 18c and 18d illustrated in Figs. 6 and 7 include a plurality of rectangular achromatic patches having different densities in addition to the plurality of rectangular chromatic patches having different colors, in which the plurality of chromatic patches and the plurality of achromatic patches are two-dimensionally arranged. The chromatic pattern is used for the correction of the figure distortion, the gradation correction, the shading correction, color correction, and the like.

The number of chromatic patches included in the chromatic pattern is not particularly limited but is preferably greater than or equal to 10 in order to perform the color correction and the like. In addition, types of colors of the chromatic patches included in the chromatic pattern are also not limited. For example, not only reference colors such as red, green, and blue (RGB) and cyan, magenta, and yellow (CMY) and intermediate colors thereof but also arbitrary types of colors having different hue, saturation, and lightness may be used.

The correction chart 18 may be composed of only one of the lattice pattern 18a, the achromatic pattern 18b, or the chromatic patterns 18c and 18d or may be composed of a combination of two or more patterns as illustrated in Fig. 8 as an example. The correction chart 18 illustrated in Fig. 8 is composed of a combination of the achromatic pattern 18b illustrated in Fig. 5 and the chromatic pattern 18c illustrated in Fig. 6.

The object 16 has a sheet shape as a target for image formation, such as a paper sheet, a sheet, and a film. A figure having an arbitrary shape and an arbitrary density of color is formed on at least one surface of the object 16. At the time of imaging, the object 16 is arranged on the correction chart 18 with the surface on which the figure is formed facing upward. While the object 16 is not particularly limited, examples of the object 16 can include a measurement sheet such as a pressure-sensitive sheet, a heat-sensitive sheet, and an ultraviolet ray (or a near-infrared ray or a mid-infrared ray) sheet.

Each of the pressure-sensitive sheet, the heat-sensitive sheet, and the ultraviolet ray sheet is a measurement sheet that develops color with a density corresponding to applied external energy by application of the external energy such as a pressure, a temperature, and an ultraviolet ray (or a near-infrared ray or a mid-infrared ray). The measurement sheet can be used for measuring a distribution, a magnitude, and the like of the external energy applied to the measurement sheet based on the shape, the density of color, and the like of the figure formed on the surface of the measurement sheet.

Next, the imaging apparatus 14 performs image formation (digital datafication) by continuously capturing the correction chart 18 and the object 16 sequentially to acquire a video image and correcting the object image among a plurality of frame images included in the video image based on the correction chart image. While the imaging apparatus 14 of the present embodiment is a smartphone having a camera function, the imaging apparatus 14 is not limited thereto and may be a digital camera or a digital video camera having a function of capturing a video image.

Fig. 2 is a block diagram of an embodiment representing an internal configuration of the imaging apparatus. As illustrated in Fig. 2, the imaging apparatus 14 comprises an imaging unit 20, a display unit 22, an operating unit 24, a storage unit 26, and a processor 28. The display unit 22, the operating unit 24, the imaging unit 20, the storage unit 26, and the processor 28 are bidirectionally connected through an internal bus 42 and can transmit and receive data to and from each other.

The imaging unit 20 images a subject and outputs an image (a still picture image and a video image) of the subject under control of the processor 28. In the present embodiment, the imaging unit 20 continuously captures the correction chart 18 and the object 16 sequentially and outputs the video image. The imaging unit 20 corresponds to the camera function of the smartphone.

The display unit 22 displays various images, information, and the like under control of the processor 28. For example, the display unit 22 is composed of a display such as a liquid crystal display (LCD), an organic electroluminescence (EL) display, a light emitting diode (LED) display, or an electronic paper. In addition, the display unit 22 may comprise a touch panel that receives a touch operation performed by a user of the imaging apparatus 14.

The operating unit 24 receives an operation of the user under control of the processor 28. The operating unit 24 includes a plurality of buttons provided on an outer surface of a housing of the imaging apparatus 14, a graphical user interface of the touch panel comprised in the display unit 22, and the like. In a case of capturing the subject or setting various setting items, the user performs a corresponding operation through the operating unit 24.

The storage unit 26 stores data and the like of the image (the still picture image and the video image) of the subject captured by the imaging unit 20 under control of the processor 28. In the present embodiment, the storage unit 26 stores data of the video image in which the correction chart 18 and the object 16 are captured. In addition, the storage unit 26 stores a program executed by the processor 28, various data, and the like.

The processor 28 controls each unit of the imaging apparatus 14 and executes various processing including capturing of the video image, storage of the data of the video image, and display of the video image. As illustrated in Fig. 3, the processor 28 comprises an acquisition processing unit 30, a determination processing unit 32, an extraction processing unit 34, a generation processing unit 36, a correction processing unit 38, and a display processing unit 40. The processor 28 functions as each processing unit by executing the program stored in the storage unit 26 by the processor 28. The acquisition processing unit 30, the determination processing unit 32, the extraction processing unit 34, the generation processing unit 36, the correction processing unit 38, and the display processing unit 40 are bidirectionally connected through the internal bus 42 and can transmit and receive data to and from each other.

The acquisition processing unit 30 controls an operation of the imaging unit 20 in accordance with the operation (imaging instruction) of the user through the operating unit 24 and executes first acquisition processing (first acquisition step) of acquiring the video image in which the correction chart 18 is captured by the imaging unit 20 (imaging apparatus 14) and second acquisition processing (second acquisition step) of continuously acquiring the video image in which the object 16 is captured by the imaging unit 20 at least one of before or after the correction chart 18 is captured.

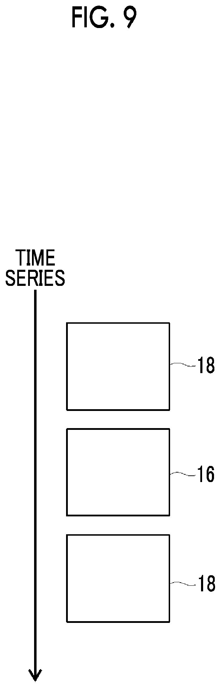

That is, the acquisition processing unit 30 may continuously acquire the video image in which the object 16 is captured after the correction chart 18 is captured, or may continuously acquire the video image in which the correction chart 18 is captured after the object 16 is captured. Alternatively, as illustrated in Fig. 9, the acquisition processing unit 30 may continuously acquire the video image after the correction chart 18 is captured, the object 16 is captured, and then, the correction chart 18 is captured.

The determination processing unit 32 executes determination processing (determination step) of determining whether each of the plurality of frame images is the object image or the correction chart image based on a correlation between adjacent frame images among the plurality of frame images included in the video image acquired by the acquisition processing.

For example, a feature amount of each frame image included in the video image is calculated by image analysis, and a correlation coefficient between the adjacent frame images is calculated based on feature amounts of the adjacent frame images. A representative frame image f within a range in which the correlation coefficient between the adjacent frame images is a value greater than or equal to a threshold value is stored for each range. A determination can be made that a range of a frame image f0 and a range of a frame image f1 are the correction chart image and the object image, respectively, based on a correlation coefficient between the representative frame images f0 and f1 corresponding to each range and the correction chart image for correlation calculation acquired in advance.

The extraction processing unit 34 executes extraction processing (extraction step) of extracting a plurality of correction chart images in which the correction chart 18 is captured and a plurality of object images in which the object 16 is captured from the plurality of frame images included in the video image based on a determination result of the determination processing.

The extraction processing unit 34 may extract the plurality of object images from a frame image on a side of the best imaging state among the plurality of frame images included in the video image.

For example, by analyzing one or more items such as a degree of camera shake, a shift amount of an angle of view, and a degree of unevenness (variation) of illumination for the plurality of frame images included in the video image, a score of each item is calculated, and the total score of all items is used as a score of the frame image. The plurality of object images are extracted from the side of the best imaging state, that is, from a frame image on a side of the highest score, among the plurality of frame images included in the video image.

In addition, the extraction processing unit 34 may extract the plurality of correction chart images from a frame image on a side of the imaging state most similar to the plurality of object images among the plurality of frame images included in the video image.

For example, the plurality of correction chart images are extracted from the side of the imaging state most similar to the plurality of object images, that is, from a side of an imaging time point most similar to the plurality of object images, or from the frame image on the side of the highest score among the plurality of frame images included in the video image. The correlation coefficient with the correction chart image for correlation calculation acquired in advance may also be considered. As the correlation coefficient is increased, the score may be calculated to be increased.

The generation processing unit 36 executes generation processing (generation step) of generating a correction parameter for correcting a representative object image that is a representative of the plurality of object images extracted by the extraction processing based on the plurality of correction chart images extracted by the same extraction processing.

While the generation processing unit 36 is not particularly limited, the generation processing unit 36 generates the correction parameter for performing the image correction such as the correction of the figure distortion, the gradation correction, the shading correction, and the color correction.

The correction processing unit 38 executes correction processing (correction step) of correcting the representative object image using the correction parameter generated by the generation processing.

The display processing unit 40 executes display processing (display step) of displaying various images, information, and the like on the display unit 22.

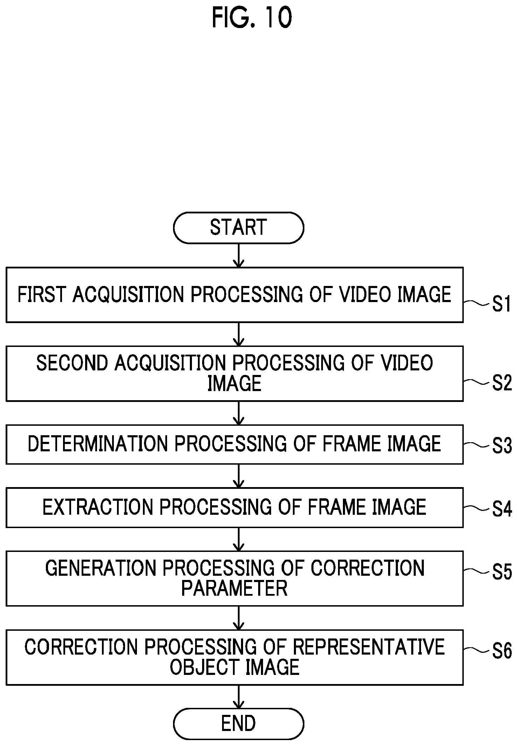

Next, an operation of the image correction apparatus 10 illustrated in Fig. 1 will be described with reference to the flowchart illustrated in Fig. 10.

First, in an arbitrary imaging environment where the angle of view, an illumination state (extraneous light, natural light, and ambient light), and the like at the time of imaging sequentially change and cannot be constantly maintained, the user holds the imaging apparatus 14 that is a smartphone in a hand and provides an instruction to start imaging by the operation of the user through the operating unit 24.

Accordingly, the operation of the imaging unit 20 is controlled by the acquisition processing unit 30, and the first acquisition processing of acquiring the video image in which the correction chart 18 is captured is executed by the imaging unit 20 (step S1).

Next, in the same arbitrary imaging environment, the user arranges the object 16 on the correction chart 18 in a state where the imaging apparatus 14 remains held in the hand.

Accordingly, the correction chart 18 is captured by the acquisition processing unit 30, and then, the second acquisition processing of continuously acquiring the video image in which the object 16 is captured is executed by the imaging unit 20 (step S2).

Since the correction chart 18 is formed on the original document stand 12, that is, since the correction chart is fixed on the original document stand 12, there is an advantage that a relative positional relationship between the correction chart 18 and the object 16 is fixed in a case of capturing the object 16.

By the first acquisition processing and the second acquisition processing, one video image in which the correction chart 18 and the object 16 are continuously captured sequentially is acquired. A video image of the correction chart 18 and a video image of the object 16 may be acquired as separate video images.

The frame images included in the video image, that is, the correction chart image and the object image, include not only the figure distortion caused by an aberration of a lens of the imaging unit 20 but also a shake of the image caused by the camera shake, the figure distortion caused by tilting at the time of imaging, unevenness (unevenness of brightness, shades, and the like) of the image caused by the unevenness of illumination at the time of imaging, and the like because the user captures the correction chart 18 and the object 16 in the arbitrary imaging environment.

In a case where the acquisition processing is finished, the determination processing of determining whether each of the plurality of frame images is the object image or the correction chart image based on the correlation between the adjacent frame images among the plurality of frame images included in the video image is executed by the determination processing unit 32 (step S3).

Next, the extraction processing of extracting the plurality of correction chart images and the plurality of object images from the plurality of frame images included in the video image based on the determination result of the determination processing is executed by the extraction processing unit 34 (step S4). In a case where a determination is made that the frame image is the object image, the extraction processing unit 34 extracts the frame image as the object image. In a case where a determination is made that the frame image is the correction chart image, the extraction processing unit 34 extracts the frame image as the correction chart image.

The determination processing and the extraction processing may be performed at once after imaging of the correction chart 18 and the object 16 is finished or may be sequentially executed while performing imaging. In a case of sequentially executing the determination processing and the extraction processing while performing imaging, each time a part of the video image of the correction chart 18 and the object 16 is acquired, the determination processing and the extraction processing of the frame image included in the part of the video image are sequentially executed.

In addition, in the extraction processing, the determination of the correction chart image and the object image may be automatically determined by the extraction processing unit 34 or may be manually (visually) determined by the user. In a case where the user performs determination, the plurality of correction chart images and the plurality of object images are extracted from the plurality of frame images included in the video image by the extraction processing unit 34 in accordance with the operation (input of the determination result) of the user through the operating unit 24.

In a case where the extraction processing is finished, the generation processing of generating the correction parameter for correcting the representative object image of the plurality of object images extracted by the extraction processing based on the plurality of correction chart images extracted by the same extraction processing is executed by the generation processing unit 36 (step S5). In the present embodiment, the generation processing unit 36 generates the correction parameter for performing the correction of the figure distortion, the gradation correction, the shading correction, and the color correction.

Next, the correction processing of correcting the representative object image using the correction parameter generated by the generation processing is executed by the correction processing unit 38 (step S6). In the present embodiment, the correction processing unit 38 performs the correction of the figure distortion, the gradation correction, the shading correction, the color correction, and the like based on the correction parameter for performing the correction of the figure distortion, the gradation correction, the shading correction, the color correction, and the like.

Since the correction chart 18 and the object 16 are captured to acquire the video image, the correction chart image and the object image having favorable imaging states and similar imaging states can be extracted from the plurality of frame images included in the video image, and the image correction of the object image can be performed based on the correction chart image. Thus, even in a case where the user captures the object 16 in the arbitrary imaging environment, it is possible to perform image formation by performing the image correction on the object 16 more easily with higher quality.

In a case where the object 16 is the measurement sheet, a distribution of the density of color and the like of the measurement sheet changes along with an elapse of time. Thus, it is required to perform image formation by easily capturing the measurement sheet on a site where the object 16 is used. In this case, after image formation of the measurement sheet is performed, the distribution, the magnitude, and the like of the external energy applied to the measurement sheet can be analyzed using digital data after image formation.

Next, the correction processing such as the correction of the figure distortion, the gradation correction, the shading correction, and the color correction will be described.

(Correction of Figure Distortion)

The frame images included in the video image include the figure distortion caused by the aberration of the lens, the figure distortion caused by tilting at the time of imaging, and the like.

In a case of correcting the figure distortion caused by the aberration of the lens, first, a lens aberration correction parameter for correcting the figure distortion caused by the aberration of the lens is generated based on the plurality of correction chart images.

The lens aberration correction parameter is not particularly limited but can be generated based on, for example, a well-known method of Zhang (Zhengyou Zhang, "A Flexible New Technique for Camera Calibration", Microsoft Research Technical Report, MSR-TR-98-71, December 2, 1998.) using the monochrome lattice pattern 18a illustrated in Fig. 4. By performing correction using the correction chart 18 of the monochrome lattice pattern, the correction of the figure distortion caused by the aberration of the lens can be performed in a state not affected by specularly reflected light.

Next, the figure distortion caused by the aberration of the lens is corrected for each of the plurality of correction chart images and for each of the plurality of object images using the lens aberration correction parameter.

In a case of correcting the figure distortion caused by tilting at the time of imaging, for example, a tilting correction parameter for correcting the figure distortion caused by tilting at the time of imaging is generated based on four or more intersections of the monochrome lattice pattern 18a illustrated in Fig. 4, more specifically, based on four vertices of at least one rectangular figure of the lattice pattern 18a, depending on a plurality of reference points on a representative correction chart image that is a representative of the plurality of correction chart images after the correction of the figure distortion caused by the aberration of the lens.

While a method of deciding the representative correction chart image is not particularly limited, for example, one correction chart image having the best imaging state, in other words, having the highest score, may be selected as the representative correction chart image from the plurality of correction chart images after the correction of the figure distortion caused by the aberration of the lens.

Alternatively, the representative correction chart image may be created by calculating an average value of signal values less than or equal to a threshold value among a plurality of signal values at each corresponding pixel position of the plurality of correction chart images after the correction of the figure distortion caused by the aberration of the lens. That is, an average value of the plurality of signal values at each corresponding pixel position of the plurality of correction chart images is a signal value at each corresponding pixel position of the representative correction chart image.

The frame image may include a signal value that exceeds the threshold value because of strong light caused by specularly reflected light from illumination. That is, a signal value affected by the strong light caused by the specularly reflected light from illumination is determined using the threshold value. By excluding such a signal value exceeding the threshold value, the representative correction chart image can be generated using a signal value that is less than or equal to the threshold value and is almost not affected by the specularly reflected light.

Next, the figure distortion caused by tilting is corrected by performing well-known tilting correction (perspective figure correction) for each of the plurality of object images after the correction of the figure distortion caused by the aberration of the lens, using the tilting correction parameter. Accordingly, corresponding pixel positions of the plurality of object images after the correction of the figure distortion caused by tilting can be matched.

The reference points may be four points or more and preferably includes four reference points constituting a square shape or an oblong shape. In addition, a size of a region composed of the four reference points is preferably greater than a figure formed on the object 16 in order to accurately perform tilting correction.

For the tilting correction of the object image, the tilting correction of the object image may be performed using the tilting correction parameter generated based on the representative correction chart image as described above, or the tilting correction of the object image may be performed using the tilting correction parameter generated based on the object image. The tilting correction parameter based on the object image can be generated based on the correction chart of which a part is captured within the object image.

Next, the representative object image of the plurality of object images after the correction of the figure distortion caused by tilting is decided as in the case of deciding the representative correction chart image.

Similarly, for example, one object image having the best imaging state, in other words, having the highest score, may be selected as the representative object image from the plurality of object images after the correction of the figure distortion caused by tilting.

Alternatively, the representative object image may be created by calculating an average value of signal values less than or equal to a threshold value among a plurality of signal values at each corresponding pixel position of the plurality of object images after the correction of the figure distortion caused by tilting. That is, an average value of the plurality of signal values at each corresponding pixel position of the plurality of object images is a signal value at each corresponding pixel position of the representative object image.

Similarly, by excluding such a signal value exceeding the threshold value, the representative object image can be generated using a signal value that is less than or equal to the threshold value and is almost not affected by the specularly reflected light.

The representative correction chart image and the representative object image after the correction of the figure distortion are obtained by correcting the figure distortion.

(Gradation Correction)

In a case of performing the gradation correction, first, for example, a plurality of achromatic patch images corresponding to the plurality of achromatic patches included in the achromatic pattern 18b illustrated in Fig. 5 are extracted from the representative correction chart image, and signal values at positions of a plurality of density patch images corresponding to positions of a plurality of spatially separately arranged density patches of the same density are acquired for each of the plurality of achromatic patch images.

Next, for each of the plurality of achromatic patch images, a signal value at each pixel position of an interpolated image having a size of the representative correction chart image is calculated by interpolation based on the signal values at the positions of the plurality of density patch images corresponding to the positions of the plurality of density patches of the same density. Accordingly, a plurality of interpolated images corresponding to the plurality of achromatic patch images are created.

Next, a spatial average value that is an average value of signal values at all pixel positions is calculated for each of the plurality of interpolated images.

Next, a gradation correction parameter for performing the gradation correction is generated such that there is no difference between a reflectivity (target value) of the plurality of achromatic patches acquired in advance and the spatial average value (actually measured value) of the plurality of interpolated images, in other words, such that linear gradations of density are obtained.

The reflectivity of the achromatic patch is a spectral reflectivity of a wavelength range having sensitivity to the density of the achromatic patch in a case where the achromatic patch of a certain density is captured by an imaging system (imaging element). While a method of acquiring the reflectivity of the achromatic patch is not particularly limited, for example, the reflectivity of the achromatic patch can be acquired by capturing the achromatic patch by the imaging system and measuring a reflectivity (signal value) corresponding to the density of the achromatic patch. In a case where high accuracy is not required for the gradation correction, the target value (set value) at a time of creating the achromatic patch may be used.

The gradation correction of the plurality of interpolated images, the representative correction chart image, and the representative object image is performed using the gradation correction parameter.

(Shading Correction)

In a case of performing the shading correction, first, based on the plurality of interpolated images after the gradation correction, a two-dimensional shading correction parameter for performing correction such that the spatial average value of the plurality of interpolated images after the gradation correction does not change before and after the shading correction and that a two-dimensional distribution of signal values of a representative interpolated image of the plurality of interpolated images after the gradation correction is flat before and after the shading correction is created.

While a method of deciding the representative interpolated image is not particularly limited, for example, one interpolated image may be selected as the representative interpolated image from the plurality of interpolated images after the gradation correction. Alternatively, the representative interpolated image may be created by calculating an average value of signal values less than or equal to a threshold value among a plurality of signal values at each corresponding pixel position of the plurality of interpolated images after the gradation correction. That is, an average value of the plurality of signal values at each corresponding pixel position of the plurality of interpolated images is a signal value at each corresponding pixel position of the representative interpolated image.

The shading correction of the representative correction chart image and the representative object image is performed using the shading correction parameter.

In a case where each pixel position of an image on which the shading correction is performed is denoted by (x, y), a signal value at each pixel position of the image before the shading correction is denoted by A(x, y), a signal value at each pixel position of the image after the shading correction is denoted by B(x, y), and a two-dimensional shading correction parameter at each pixel position of the image on which the shading correction is performed is denoted by S(x, y), the signal value at each pixel position of the image after the shading correction is calculated based on the following equation.

$$B(x, y) = S(x, y) \times A(x, y)$$

In a case where the plurality of achromatic patches having different densities are included as the correction chart 18 for the shading correction, that is, in a case where a plurality of two-dimensional shading correction parameters corresponding to a plurality of densities are present, and the shading correction parameters corresponding to each of the plurality of densities are denoted by S1(x, y), S2(x, y), ... SN(x, y), and signal values of the image in which the gradation correction is performed on each of the plurality of densities such that linear gradations are obtained are denoted by C1, C2, ..., CN (C1 > C2 > ... > CN), the signal value at each pixel position of the image after the shading correction is calculated based on the following equations.

In a case of A(x, y) > C1,

$$B(x, y) = S1(x, y) \times B(x, y)$$

In a case of C1 ≥ A(x, y) > C2,

$$B(x, y) = (\alpha \times S1(x, y) + \beta \times S2(x, y)) \times A(x, y)$$

Here, α = (A(x, y) - S2(x, y))/(S1(x, y) - S2(x, y)) and β = 1.0 - α
The same applies to a case of A(x, y) > C3 and later.

In a case of CN ≥ A(x, y),

$$B(x, y) = SN(x, y) \times A(x, y)$$

In a case of a color image in which each pixel consists of RGB, the shading correction is performed for each channel of RGB.

(Color Correction)

In a case of performing the color correction, first, for example, a signal value of each of a plurality of chromatic patch images is acquired by extracting the plurality of chromatic patch images corresponding to the plurality of chromatic patches included in the chromatic pattern 18c illustrated in Fig. 6 from the representative correction chart image.

Next, a color correction parameter for performing the color correction such that there is no difference between a signal value (target value) of each of the plurality of chromatic patches acquired in advance and a signal value (actually measured value) of each of the plurality of corresponding chromatic patch images, in other words, such that the signal value of each chromatic patch is the same as the signal value of each corresponding chromatic patch image is generated.

While a method of acquiring the signal value of the chromatic patch is not particularly limited, the signal value of the chromatic patch can be acquired by, for example, measuring the chromatic patch as in the case of the achromatic patch. In a case where high accuracy is not required for the color correction, the target value (set value) at a time of creating the chromatic patch may be used.

While a method of generating the color correction parameter is not particularly limited, for example, the color correction parameter can be obtained by converting a relationship between the signal value (target value) of the chromatic patch consisting of RGB and the signal value (actually measured value) of the chromatic patch image also consisting of RGB by three-row three-column matrix calculation based on well-known three-row three-column matrix processing. In addition, for example, a conversion matrix can also be obtained using a well-known technology such as the least squares method.

The color correction of the representative object image after the shading correction is performed using the color correction parameter.

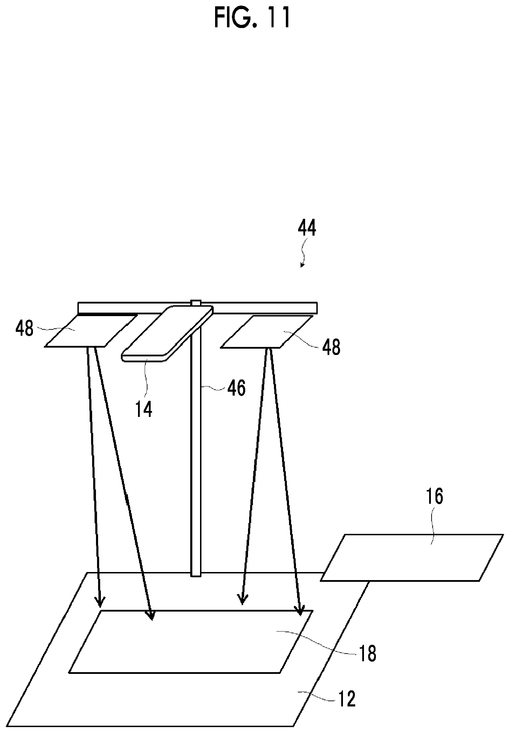

The present invention is not limited to a case where the user captures the correction chart 18 and the object 16 while holding the imaging apparatus 14 such as a smartphone in the hand. Imaging may also be performed using an imaging assisting tool 44 as illustrated in Fig. 11. That is, an image correction apparatus illustrated in Fig. 11 further comprises the imaging assisting tool 44 in the image correction apparatus illustrated in Fig. 1. The imaging assisting tool 44 comprises an installation stand 46 and assisting illumination 48.

The installation stand 46 is a stand for installing the imaging apparatus 14 at the time of imaging. By installing the imaging apparatus 14 on the installation stand 46 at the time of imaging, the imaging apparatus 14 can be fixed. Thus, the figure distortion caused by tilting at the time of imaging, the shake of the image caused by the camera shake, and the like can be reduced.

The assisting illumination 48 illuminates the correction chart 18, the object 16, and the like at the time of imaging. By performing illumination with the assisting illumination 48 at the time of imaging, the unevenness of illumination at the time of imaging can be reduced.

By capturing the correction chart and the object 16 using the imaging assisting tool 44, the figure distortion, the unevenness of illumination, and the like included in the correction chart image and the object image included in the video image can be reduced. Thus, image quality of the object image after the image correction can be improved.

For example, the present invention can be implemented as an application program that operates in an imaging apparatus such as a smartphone. In addition, the image correction apparatus may comprise a server that operates in cooperation with the application program of the imaging apparatus. In this case, the imaging apparatus as a client executes the first acquisition processing, the second acquisition processing, the display processing, and the like. The server receives the video image from the imaging apparatus, executes at least one of the determination processing, the extraction processing, the generation processing, or the correction processing, and transmits a result of processing to the imaging apparatus. The imaging apparatus can execute subsequent processing in accordance with the result of processing received from the server.

Examples of the processor include a central processing unit (CPU) that is a general-purpose processor functioning as various processing units by executing software (program), a programmable logic device (PLD) such as a field programmable gate array (FPGA) that is a processor having a circuit configuration changeable after manufacturing, and a dedicated electric circuit such as an application specific integrated circuit (ASIC) that is a processor having a circuit configuration dedicatedly designed to execute specific processing.

One processing unit may be composed of one of the various processors or may be composed of a combination of two or more processors of the same type or different types, for example, a combination of a plurality of FPGAs or a combination of an FPGA and a CPU. In addition, a plurality of processing units may be composed of one of the various processors, or two or more of the plurality of processing units may be collectively configured using one processor.

For example, as represented by a computer such as a server and a client, a form in which one processor is composed of a combination of one or more CPUs and software and the processor functions as the plurality of processing units is possible. In addition, as represented by a system on chip (SoC) and the like, a form of using a processor that implements functions of the entire system including the plurality of processing units in one integrated circuit (IC) chip is possible.

Furthermore, a hardware configuration of the various processors is more specifically an electric circuit (circuitry) in which circuit elements such as semiconductor elements are combined.

In addition, for example, a method according to the embodiment of the present invention can be implemented by a program causing a computer (processor) to execute each step of the method. In addition, a computer readable recording medium on which the program is recorded can be provided.

While the present invention has been described in detail so far, the present invention is not limited to the embodiment and may be subjected to various improvements and changes without departing from the gist of the present invention.

Explanation of References

10: image correction apparatus
12: original document stand
14: imaging apparatus
16: object
18: correction chart
20: imaging unit
22: display unit
24: operating unit
26: storage unit
28: processor
30: acquisition processing unit
32: determination processing unit
34: extraction processing unit
36: generation processing unit
38: correction processing unit
40: display processing unit
42: internal bus
44: imaging assisting tool
46: installation stand
48: assisting illumination

**Claims**

1. An image correction method comprising:

   a first acquisition step of acquiring a video image in which a correction chart is captured by an imaging apparatus;
   a second acquisition step of continuously acquiring the video image in which an object having a sheet shape is captured by the imaging apparatus at least one of before or after the correction chart is captured;
   an extraction step of extracting a plurality of correction chart images in which the correction chart is captured and a plurality of object images in which the object is captured from a plurality of frame images included in the video image;
   a generation step of generating a correction parameter for correcting a representative object image of the plurality of object images based on the plurality of correction chart images; and
   a correction step of correcting the representative object image using the correction parameter.

2. The image correction method according to claim 1, further comprising:

   a determination step of determining whether each of the plurality of frame images is the object image or the correction chart image based on a correlation between adjacent frame images among the plurality of frame images included in the video image,
   wherein the plurality of object images and the plurality of correction chart images are extracted from the plurality of frame images included in the video image based on a determination result of the determination step.

3. The image correction method according to claim 1 or 2,

   wherein a lens aberration correction parameter for correcting figure distortion caused by an aberration of a lens of the imaging apparatus is generated based on the plurality of correction chart images, and
   the figure distortion caused by the aberration of the lens is corrected for each of the plurality of correction chart images and for each of the plurality of object images using the lens aberration correction parameter.

4. The image correction method according to claim 3,

   wherein a tilting correction parameter for correcting figure distortion caused by tilting at a time of imaging is generated based on a plurality of reference points on a representative correction chart image of the plurality of correction chart images after the correction of the figure distortion caused by the aberration of the lens, and the figure distortion caused by tilting is corrected for each of the plurality of object images after the correction of the figure distortion caused by the aberration of the lens, using the tilting correction parameter.

5. The image correction method according to claim 4,

   wherein the correction chart includes a plurality of achromatic patches having different densities, and a plurality of density patches having the same density are spatially discretely arranged for each of the plurality of achromatic patches,
   signal values at positions of a plurality of density patch images corresponding to positions of the plurality of density patches having the same density are acquired for each of a plurality of achromatic patch images by extracting the plurality of achromatic patch images corresponding to the plurality of achromatic patches from the representative correction chart image,
   a plurality of interpolated images corresponding to the plurality of achromatic patch images are created by calculating a signal value at each pixel position of an interpolated image having a size of the representative correction chart image by interpolation based on the signal values at the positions of the plurality of density patch images corresponding to the positions of the plurality of density patches having the same density for each of the plurality of achromatic patch images,
   a spatial average value that is an average value of signal values at all pixel positions is calculated for each of the plurality of interpolated images,
   a gradation correction parameter for performing gradation correction such that there is no difference between a reflectivity of the plurality of achromatic patches acquired in advance and the spatial average value of the plurality of interpolated images is generated, and
   the gradation correction of the plurality of interpolated images, the representative correction chart image, and the representative object image of the plurality of object images after the correction of the figure distortion caused by tilting is performed using the gradation correction parameter.

6. The image correction method according to claim 5,

   wherein a two-dimensional shading correction parameter for performing correction such that the spatial average value of the plurality of interpolated images after the gradation correction does not change before and after shading correction and that a two-dimensional distribution of signal values of a representative interpolated image of the plurality of interpolated images after the gradation correction is flat before and after the shading correction is created based on the plurality of interpolated images after the gradation correction, and
   the shading correction of the representative correction chart image and the representative object image is performed using the shading correction parameter.

7. The image correction method according to claim 6,

   wherein the correction chart includes a plurality of chromatic patches having different colors,
   a signal value of each of a plurality of chromatic patch images is acquired by extracting the plurality of chromatic patch images corresponding to the plurality of chromatic patches from the representative correction chart image,
   a color correction parameter for performing color correction such that there is no difference between a signal value of each of the plurality of chromatic patches acquired in advance and a signal value of each of the plurality of corresponding chromatic patch images is generated, and
   the color correction of the representative object image after the shading correction is performed using the color correction parameter.

8. The image correction method according to any one of claims 1 to 7,
   wherein the plurality of object images are extracted from a frame image on a side of a best imaging state among the plurality of frame images included in the video image.

9. The image correction method according to claim 8,
   wherein the plurality of correction chart images are extracted from a frame image on a side of the imaging state most similar to the plurality of object images among the plurality of frame images included in the video image.

10. The image correction method according to any one of claims 1 to 9,
    wherein a video image of the object arranged on the correction chart is captured.

11. The image correction method according to any one of claims 1 to 10,
    wherein the object is a measurement sheet that develops color with a density corresponding to external energy by application of the external energy.

12. An image correction apparatus comprising:

    a processor,
    wherein the processor is configured to:

    acquire a video image in which a correction chart is captured by an imaging apparatus;
    continuously acquire the video image in which an object having a sheet shape is captured by the imaging apparatus at least one of before or after the correction chart is captured;
    extract a plurality of correction chart images in which the correction chart is captured and a plurality of object images in which the object is captured from a plurality of frame images included in the video image;
    generate a correction parameter for correcting a representative object image of the plurality of object images based on the plurality of correction chart images; and
    correct the representative object image using the correction parameter.

13. A program causing a computer to execute each step of the image correction method according to any one of claims 1 to 11.

14. A computer readable recording medium on which a program causing a computer to execute each step of the image correction method according to any one of claims 1 to 11 is recorded.

# FIG. 1

# FIG. 2

IMAGING APPARATUS

| | |
|---|---|
| 20 | IMAGING UNIT |
| 22 | DISPLAY UNIT |
| 24 | OPERATING UNIT |
| 26 | STORAGE UNIT |
| 28 | PROCESSOR |

14

42

## FIG. 3

| PROCESSOR |
|---|
| 30 — ACQUISITION PROCESSING UNIT |
| 32 — DETERMINATION PROCESSING UNIT |
| 34 — EXTRACTION PROCESSING UNIT |
| 36 — GENERATION PROCESSING UNIT |
| 38 — CORRECTION PROCESSING UNIT |
| 40 — DISPLAY PROCESSING UNIT |

28

~ 42

## FIG. 4

18a

FIG. 5

18b

FIG. 6

18c

# FIG. 7

18d

# FIG. 8

18c

18b

12

# FIG. 9

TIME
SERIES

18

16

18

# FIG. 10

```
              ┌─────────────┐
              │    START    │
              └──────┬──────┘
                     ↓
   ┌──────────────────────────────────────────┐
   │  FIRST ACQUISITION PROCESSING OF VIDEO IMAGE │──S1
   └──────────────────┬───────────────────────┘
                      ↓
   ┌──────────────────────────────────────────┐
   │   SECOND ACQUISITION PROCESSING OF VIDEO  │──S2
   │                 IMAGE                     │
   └──────────────────┬───────────────────────┘
                      ↓
   ┌──────────────────────────────────────────┐
   │  DETERMINATION PROCESSING OF FRAME IMAGE  │──S3
   └──────────────────┬───────────────────────┘
                      ↓
   ┌──────────────────────────────────────────┐
   │   EXTRACTION PROCESSING OF FRAME IMAGE    │──S4
   └──────────────────┬───────────────────────┘
                      ↓
   ┌──────────────────────────────────────────┐
   │   GENERATION PROCESSING OF CORRECTION     │──S5
   │                PARAMETER                  │
   └──────────────────┬───────────────────────┘
                      ↓
   ┌──────────────────────────────────────────┐
   │ CORRECTION PROCESSING OF REPRESENTATIVE   │──S6
   │              OBJECT IMAGE                 │
   └──────────────────┬───────────────────────┘
                      ↓
              ┌─────────────┐
              │     END     │
              └─────────────┘
```

# FIG. 11

## INTERNATIONAL SEARCH REPORT

| International application No. |
| --- |
| PCT/JP2021/019281 |

### A. CLASSIFICATION OF SUBJECT MATTER

H04N 5/232(2006.01)i; G06T 1/00(2006.01)n; G06T 5/00(2006.01)n; G06T 7/80(2017.01)n; G06T 7/90(2017.01)n; H04N 1/387(2006.01)n; H04N 5/222(2006.01)n; H04N 9/04(2006.01)n

FI: H04N5/232; H04N1/387; G06T7/90 Z; G06T7/80; H04N5/222 300; H04N9/04 B; G06T1/00 510; G06T5/00 725

According to International Patent Classification (IPC) or to both national classification and IPC

### B. FIELDS SEARCHED

Minimum documentation searched (classification system followed by classification symbols)

H04N5/232; G06T1/00; G06T5/00; G06T7/80; G06T7/90; H04N1/387; H04N5/222; H04N9/04

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | US 2016/0088266 A1 (THOMSON LICENSING) 24 March 2016 (2016-03-24) entire text, all drawings | 1–14 |
| A | US 2019/0124232 A1 (FORD GLOBAL TECHNOLOGIES, LLC) 25 April 2019 (2019-04-25) entire text, all drawings | 1–14 |
| A | JP 2012-238932 A (HOEI CO., LTD.) 06 December 2012 (2012-12-06) paragraph [0005] | 1–14 |

☐ Further documents are listed in the continuation of Box C.  ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 30 July 2021 (30.07.2021) | 10 August 2021 (10.08.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application no. |
| --- |
| PCT/JP2021/019281 |

| Patent Documents referred in the Report | Publication Date | Patent Family | Publication Date |
| --- | --- | --- | --- |
| US 2016/0088266 A1 | 24 Mar. 2016 | (Family: none) | |
| US 2019/0124232 A1 | 25 Apr. 2019 | DE 102018125801 A CN 109685722 A | |
| JP 2012-238932 A | 06 Dec. 2012 | (Family: none) | |

Form PCT/ISA/210 (patent family annex) (January 2015)

**REFERENCES CITED IN THE DESCRIPTION**

**Patent documents cited in the description**

- JP 2016171475 A
- JP 2007194794 A
- JP 2004007300 A

**Non-patent literature cited in the description**

- **ZHENGYOU ZHANG.** A Flexible New Technique for Camera Calibration. *Microsoft Research Technical Report, MSR-TR-98-71,* 02 December 1998